# EUROPÄISCHE PATENTANMELDUNG

(11) **EP 1 820 684 A1**
(43) Veröffentlichungstag der Anmeldung: **22.08.2007**
(21) Anmeldenummer: 07101643.0
(22) Anmeldetag: 02.02.2007
(51) Int. Cl.: B60K 35/00

(54) **Verfahren und System zur Information eines Fahrers eines Kraftfahrzeugs über auftretende Meldungen eines Fahrzeugüberwachungssystems**

(30) Priorität: 21.02.2006 DE 102006008381
(71) Anmelder: Ford Global Technologies, LLC, Dearborn, MI 48126 (US)
(72) Erfinder: Becker, Stefan, 51503, Rösrath (DE); Fußwinkel, Christine, 50129, Bergheim (DE); Mihm, Johannes, 50674, Köln (DE); Müller, Holger, 50735, Köln (DE)
(74) Vertreter: Dörfler, Thomas

(57) **Zusammenfassung**

Verfahren und System zur Information eines Fahrers eines Kraftfahrzeugs, insbesondere eines PKW, über auftretende Meldungen eines Fahrzeugüberwachungssystems, wobei eine Klassifizierung der Meldungen nach der Wichtigkeit der Meldung der überwachten Fahrzeugfunktion vorgenommen wird und die Information des Fahrers über die zu meldende Information anhand der Klassifizierung der Meldung vorgenommen wird.

## Beschreibung

Die Erfindung betrifft ein Verfahren und System zur Information eines Fahrers eines Kraftfahrzeugs über auftretende Meldungen eines Fahrzeugüberwachungssystems.

Verfahren und Systeme zur Information eines Fahrers eines Kraftfahrzeugs über auftretende Meldungen eines Fahrzeugüberwachungssystems sind grundsätzlich bekannt.

So werden z. B. der Motor, Sensoren der Motortemperatur und der Öltemperatur, die Außentemperatur, das ABS, die Abstandssensoren, die Bremssysteme, der Reifendruck, aktive Fahrzeugprogramme wie ESP usw. überwacht und deren Status mitgeteilt bzw. Fehlermeldungen bei Störungen weitergegeben.

Einige der Meldungen dienen nur zur Information des Fahrers über den Betriebszustand des Fahrzeugs oder der Straßenbedingungen. Andere Meldungen benötigen jedoch entweder sofort oder bei Gelegenheit das Tätigwerden des Fahrers. So muss bei einem zu niedrigen Ölstand oder zu hoher Öltemperatur der Fahrer den Wagen entweder anhalten, in die Werkstatt fahren usw. Andere Warnungen, wie z. B. Waschwasserstand niedrig, können dagegen bei Bedarf "erledigt" werden.

Daneben besteht die Schwierigkeit, dass in modernen Fahrzeugen teilweise mehrere Hundert solcher Meldungen durch das Fahrzeugüberwachungssystem generiert und dem Fahrer zur Information mitgeteilt werden. Zudem werden dabei häufig auf Anhieb unverständliche Abkürzungen verwendet, die den Fahrer in Unkenntnis lassen, ob etwas unternommen werden muss und wenn ja, was zu unternehmen ist.

Zudem ist oft störend, dass die Meldungen wiederholt auftreten, wie z. B. bei einem niedrigen Waschwasserstand, oder den Fahrer irritieren, wie z. B. bei der üblichen akustischen Warnung bei Temperaturen unterhalb von ca. 4 °C.

Theoretisch könnten natürlich die Zahl der Meldungen künstlich verringert werden, jedoch ist es aus rechtlichen und praktischen Aspekten notwendig einen Großteil der Meldungen an den Fahrer weiterzugeben.

Aus der EP 1 214 216 B1 ist ein Verfahren und eine Vorrichtung zur aktiven Hilfestellung eines Kraftfahrzeugführers in einem Kraftfahrzeug bekannt, bei dem ein Steuergerät und eine Eingabe- und Anzeigeeinheit vorgesehen sind, wobei das Steuergerät bei einem kritischen Fahrzeugzustand dem Fahrer eine Handlung vorschlägt und bei deren Auswahl selbsttätig ausführt.

Dieses Verfahren erlaubt es zwar, den Fahrer in seiner Entscheidung bezüglich der Vorgehensweise in einem kritischen Fahrzeugzustand zu lenken bzw. diesem die Entscheidung abzunehmen, doch stellt es keine Lösung für die weiteren, oben angegebenen Probleme der Informationsüberfrachtung bereit.

Demgegenüber ist es eine Aufgabe der Erfindung, ein Verfahren und ein System bereit zustellen, die eine Information des Fahrers erlauben, die zum einen verständlich ist und andererseits die Mitteilung einer Vielzahl von unterschiedlichen Meldungen möglich macht. Ferner sollen das Verfahren und das System trotzdem die Information des Fahrers über sicherheitsrelevante und technisch unbedingt notwendige Meldungen in geeigneter Weise erlauben. Zusätzlich soll die Information des Fahrers in gewissem Umfang den persönlichen Vorlieben anpassbar sein. Nicht zu Letzt sollen dem Fahrer auch Hinweise auf notwendige Handlung zur Behebung der hinter der Meldung stehenden (Fehl)Funktion geliefert werden.

Diese Aufgaben werden durch das in Anspruch 1 angegebene Verfahren und das in Anspruch 18 angegebene System gelöst.

Dadurch, dass in dem Verfahren zur Information eines Fahrers eines Kraftfahrzeugs, insbesondere eines PKW, über auftretende Meldungen eines Fahrzeugüberwachungssystems eine Klassifizierung der Meldungen nach der Wichtigkeit der Meldung der überwachten Fahrzeugfunktion vorgenommen wird und die Information des Fahrers über die zu meldende Information anhand der Klassifizierung der Meldung vorgenommen wird, ist es möglich, dem Fahrer die Meldungen je nach ihrer Wichtigkeit in unterschiedlicher Weise zu präsentieren bzw. zu behandeln.

Es ist nämlich erkannt worden, dass es durch die Klassifizierung möglich ist, die Meldungen des Fahrzeugüberwachungssystems zu filtern, um die Zahl der Meldungen an den Fahrer zu reduzieren, den Inhalt der Meldungen zu erklären und gleichzeitig dem Fahrer einen Hinweis zur Behebung zu geben (soweit notwendig).

So werden alle Status- und Fehlermeldungen des Fahrzeugüberwachungssystems nach ihrer Wichtigkeit z. B. in vier Klassen eingeteilt. Dies sind beispielsweise Meldungen mit niedriger, normaler, hoher oder äußerst hoher oder höchster Priorität bzw. Wichtigkeit.

Meldungen mit niedriger Priorität sind solche, die dem Fahrer lediglich zur Information des Betriebszustandes, der Straßenbedingungen oder als Statusanzeige dienen. Beispiele sind die momentane Außentemperatur oder die gewählte Einstellung des ESP Programms. Solche Meldungen bedürfen keiner direkten Handlung des Fahrers und werden somit lediglich zu seiner Information mitgeteilt. Somit können diese Meldungen z. B. ohne Warn- oder Alarmsignal einfach durch geeignete Klartext- und/oder Bildanzeigen auf einer Multifunktionsanzeige oder über beleuchtete Symboldarstellungen erfolgen.

Meldungen mit normaler Priorität sind solche, die dem Fahrer zur Information über Betriebszustände dienen, die von dem normalen Zustand abweichen und bei Bedarf eine Tätigkeit zur Behebung benötigen. Ein Beispiel ist die Meldung eines niedrigen Waschwasserstands. Solche Meldungen bedürfen keiner sofortigen Handlung des Fahrers und werden somit zu seiner Information mitgeteilt, so dass er bei Bedarf tätig werden kann, um ihre Ursachen zu beheben. Somit können diese Meldungen z. B. ohne Warn- oder Alarmsignal einfach durch geeignete Klartext- und/oder Bildanzeigen auf einer Multifunktionsanzeige oder über beleuchtete Symboldarstellungen erfolgen. Zusätzlich wird dem Fahrer soweit notwendig ein Hinweis für die Tätigkeit zur Behebung der Ursache der Meldung angezeigt. Wahlweise kann vorgesehen sein, dass die Anzeige der Meldung durch eine Interaktion, d. h. Bestätigung, durch den Fahrer beendet wird. Bestätigte Meldungen können ferner über ein Logbuch erneut aufgerufen werden. Zusätzlich ist es möglich nach Ablauf einer gewissen persönlich einstellbaren und/oder- einer vordefinierten Zeit automatisch die Anzeige der Meldung zu beenden, so dass der Fahrer nicht ständig irritiert und abgelenkt wird. Die Meldungen mit normaler Priorität können bei ihrer Anzeige auch durch ein Warnsignal unterstützt werden, das ebenfalls je nach persönlicher Vorliebe einstellbar bzw. abstellbar ist.

Meldungen mit hoher Priorität sind solche, die dem Fahrer zur Information über Fehlermeldungen dienen, die von dem normalen Zustand abweichen und eine Tätigkeit zur Behebung benötigen, jedoch nicht kritisch für den Betrieb des Fahrzeugs sind. Ein Beispiel ist die Meldung eines blockierten oder bedeckten (d. h. meist verschmutzten) Abstandssensors. Solche Meldungen bedürfen keiner sofortigen Handlung des Fahrers, sollten jedoch sobald, wie möglich behoben werden. Somit werden diese Meldungen mit einem Warnsignal und durch geeignete Klartext- und/oder Bildanzeigen auf einer Multifunktionsanzeige oder über beleuchtete Symboldarstellungen und einer Hinweislampe erfolgen. Zusätzlich wird dem Fahrer soweit notwendig ein Hinweis für die Tätigkeit zur Behebung der Ursache der Meldung angezeigt. Wahlweise kann vorgesehen sein, dass die Anzeige der Meldung durch eine Interaktion, d. h. Bestätigung, durch den Fahrer beendet wird. Bestätigte Meldungen können wiederum über ein Logbuch erneut aufgerufen werden. Zusätzlich ist es möglich nach Ablauf einer gewissen persönlich einstellbaren und/oder einer vordefinierten Zeit automatisch die Anzeige der Meldung zu beenden, so dass der Fahrer nicht ständig irritiert und abgelenkt wird. Die Meldungen mit hoher Priorität werden bei ihrer Anzeige auch durch ein Warnsignal unterstützt, das aber je nach persönlicher Vorliebe einstellbar bzw. abstellbar ausgestaltet ist.

Meldungen mit höchster Priorität sind solche, die dem Fahrer zur Information über Fehlermeldungen dienen, die von dem normalen Zustand abweichen und eine sofortige Tätigkeit zur Behebung benötigen, da sie kritisch für den Betrieb des Fahrzeugs sind. Ein Beispiel ist die Meldung über einen zu niedrigen Reifendruck. Solche Meldungen bedürfen einer sofortigen Handlung des Fahrers. Somit werden diese Meldungen mit einem Alarmsignal und durch geeignete Klartext- und/oder Bildanzeigen auf einer Multifunktionsanzeige oder über beleuchtete Symboldarstellungen und einer Alarmlampe erfolgen. Zusätzlich wird dem Fahrer soweit möglich eine Handlung zur Behebung der Ursache der Meldung angezeigt. So würde im vorliegenden Beispiel der Fahrer zum sofortigen Anhalten geraten werden, um den Reifendruck zu kontrollieren. Wahlweise kann vorgesehen sein, dass die Anzeige der Meldung durch eine Interaktion, d. h. Bestätigung, durch den Fahrer beendet wird. Bestätigte Meldungen können wiederum über ein Logbuch erneut aufgerufen werden. Die Meldungen mit höchster Priorität werden bei ihrer Anzeige auch durch ein Alarmsignal unterstützt, das nicht veränderbar oder ausstellbar ausgestaltet ist.

Die Information des Fahrers wird also bevorzugt mittels einer optischen Anzeige und/oder eines akustischen Signals vorgenommen, wobei die optische Anzeige der zu meldenden Information über eine dedizierte und/oder generische Anzeige erfolgen kann und die zu meldende Information dem Fahrer in Abhängigkeit von der Klassifizierung der Meldung in Form einer dedizierten Lampe und/oder eines ggf. beleuchteten Symbols erfolgen kann.

Wichtige oder komplexe Meldungen, die in sich nicht verständlich sind, werden somit bevorzugt durch eine Klartext- und/oder Bildanzeige (Piktogramm), vorzugsweise auf einer zentralen Multifunktionsanzeige dargestellt.

Zusätzlich wird daher die optische Anzeige je nach Wichtigkeit der zu meldenden Information durch ein akustisches Warn- oder Alarmsignal unterstützt.

Bei weniger kritischen Meldungen kann also vorgesehen sein, dass die Anzeige der zu meldenden Information nach einer vorgebbaren Zeit beendet wird.

Zudem ist es möglich, dass die Anzeige der zu meldenden Information nach einer Interaktion des Fahrers beendet wird.

Der wahlweise Hinweis auf die notwendige oder bevorzugte Handlung des Fahrers kann z. B. ausgewählt werden aus der Gruppe bestehend aus: Sofort Anhalten, Werkstatt sofort aufsuchen, Werkstatt aufsuchen oder Handbuch konsultieren. Hierbei versteht sich, dass diese Hinweise sinngemäß durch andere Hinweise ersetzt werden können.

Die Erfindung umfasst auch ein entsprechendes System zur Information eines Fahrers eines Kraftfahrzeugs über auftretende Meldungen eines Fahrzeugüberwachungssystems, insbesondere zur Durchführung des Verfahrens nach einem der Ansprüche 1 bis 17, mit einer Einheit zur Klassifizierung der Meldungen nach der Wichtigkeit oder Priorität der Meldung der überwachten Fahrzeugfunktion und mit einer Einheit für die Information des Fahrers über die Meldung anhand der Klassifizierung der Meldung.

Sinnvollerweise werden die Meldungen im Sichtbereich des Fahrers im Armaturenbrett vorgenommen, also üblicherweise im Bereich der Instrumente, wie Tachometer und Drehzahlmesser usw.

Sinnvollerweise umfasst die Einheit für die Information des Fahrers mindestens eine optische Anzeige, mindestens eine akustische Signalvorrichtung und eine Interaktionseinheit für den Fahrer, wobei die Interaktionseinheit für den Fahrer derart verschaltet ist, dass ihre Betätigung die Information des Fahrers bzw. die Anzeige der jeweiligen Meldung beendet. Sie kann z. B. als Druckschalter am Lenkrad ausgebildet sein.

Die optische Anzeige kann mindestens eine dedizierte Lampe und/oder mindestens eine generische Lampe und/oder mindestens ein beleuchtetes Symbol und/oder mindestens eine Multifunktionsanzeige umfassen. Vorzugsweise ist die Multifunktionsanzeige im zentralen Sichtfeld des Fahrers angeordnet ist, z. B. in einem Headup-Display, in einem Kombi-Instrument, insbesondere zwischen Tachometer und Drehzahlmesser, in einer zentralen Anzeige oberhalb der Mittelkonsole und/oder an einer anderen geeigneten Stelle im Armaturenbrett. Die Multifunktionsanzeige ist vorzugsweise eine hinterleuchtbare LCD oder LED Anzeige mit einzeln ansteuerbaren Pixeln; prinzipiell kann sie aber durch jedes geeignete Anzeigemittel dargestellt werden.

Die dedizierte Lampe und/oder die generische Lampe und/oder das beleuchtete Symbol können konzentrisch innerhalb des Tachometers und/oder des Drehzahlmessers angeordnet sein, so dass kein Platz verschenkt wird und sie ständig im Blickfeld des Fahrers liegen.

Die akustische Signalvorrichtung ist ausgestaltet, um mindestens ein Warn- und ein Alarmsignal in Abhängigkeit der Klassifizierung der Meldung auszugeben. Dabei kann das Warnsignal einstellbar bzw. abschaltbar sein, wohingegen das Alarmsignal unveränderlich ist.

Ferner kann vorgesehen sein, dass die Einheit für die Information des Fahrers eine Zeiteinheit umfasst, die die Information des Fahrers in Abhängigkeit der Klassifizierung nach einer vorgebbaren und/oder einer vordefinierten Zeitdauer beendet.

Weitere Merkmale, Einzelheiten und Vorteile der Erfindung ergeben sich aus der nachfolgenden Beschreibung von Ausführungsbeispielen anhand der Zeichnung. Es zeigen:
- Fig. 1: eine schematische Übersicht der Klassifizierung der Meldungen und die Information des Fahrers mittels optischer und akustischer Anzeigen;
- Fig. 2: ein Beispiel einer Meldung mit niedriger Priorität ;
- Fig. 3: ein Beispiel einer Meldung mit normaler Priorität;
- Fig. 4: ein Beispiel einer Meldung mit hoher Priorität und
- Fig. 5: ein Beispiel einer Meldung mit höchster Priorität.

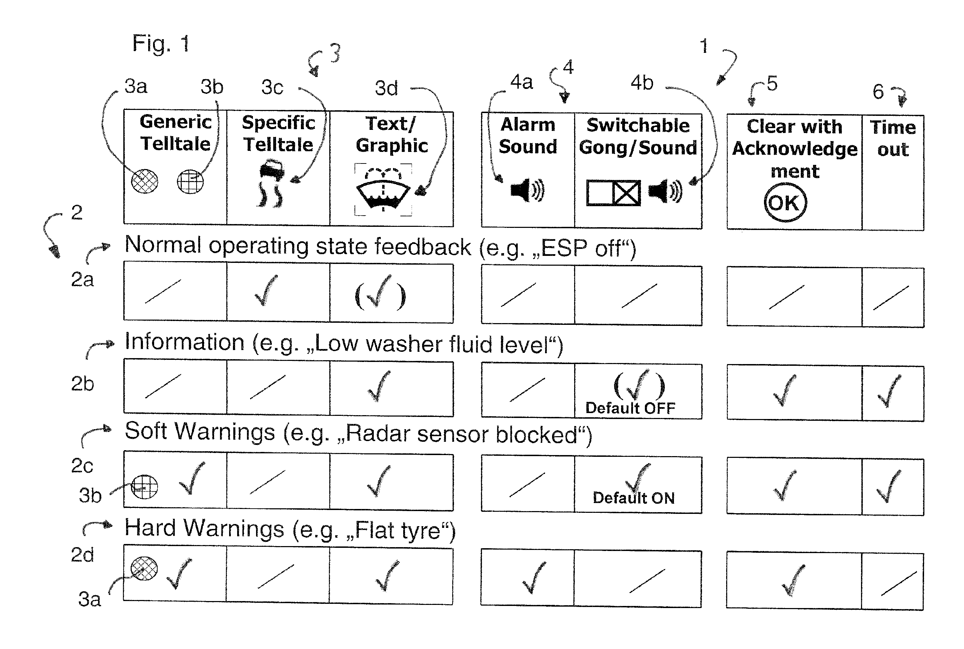

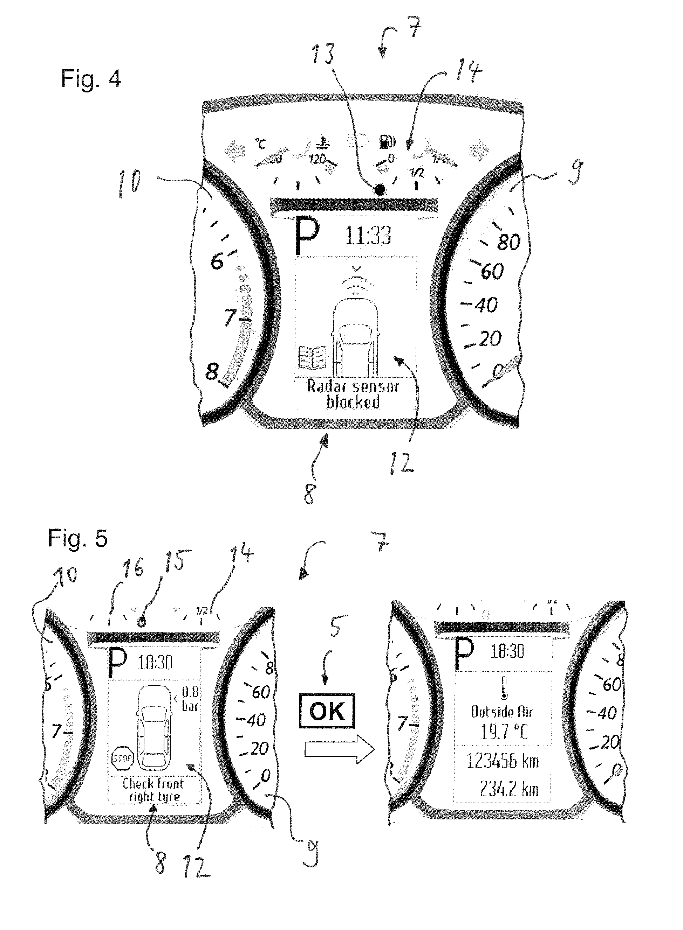

Figur 1 zeigt eine schematische Übersicht 1 der Klassifizierung der Meldungen 2 und die resultierende Information des Fahrers über Anzeigen 3 und Signale 4. Die Übersicht 1 ist als Matrix der Klassifizierung der Meldungen 2 und der Mittel zur Information des Fahrers dargestellt, wobei die Ordinate die Meldungen 2 und die Abszisse die Mittel zur Information des Fahrers angibt. Optionale Möglichkeiten sind in Klammern dargestellt.

Die Meldungen sind vorliegend in vier Klassen eingeteilt. Dies sind vorliegend Meldungen 2 mit niedriger 2a, normaler 2b, hoher 2c oder äußerst hoher oder höchster 2d Priorität.

Die Anzeigen 3 umfassen sowohl generische Warn- und Alarmlampen 3a, 3b als auch dedizierte Symbolleuchten 3c sowie eine graphische und Klartextanzeige 3d, die auf einer Multifunktionsanzeige dargestellt wird.

Die Signale 4 umfassen ein nicht verstellbares Alarmsignal 4a und ein abschaltbares Warnsignal 4b.

Zusätzlich ist auf der Abszisse die Möglichkeit des Fahrers zur Bestätigung 5 der Meldung sowie eine Beendigung der Meldung durch Zeitablauf 6 ergänzt.

Somit ergeben sich folgende Möglichkeiten der Information des Fahrers je nach Klassifizierung der auftretenden Meldung:

Meldungen mit niedriger Priorität 2a sind solche, die dem Fahrer lediglich als Statusanzeige und/oder zur Information des Betriebszustandes oder der Straßenbedingungen dienen. Vorliegend ist als Beispiel die gewählte Einstellung des ESP Programms abgebildet. Solche Meldungen bedürfen keiner direkten Handlung des Fahrers und werden somit lediglich zu seiner Information mitgeteilt. Somit werden diese Meldungen 2a ohne Warn- oder Alarmsignal 4 einfach durch geeignete Klartext- und/oder Bildanzeigen 3d auf einer Multifunktionsanzeige oder über beleuchtete Symboldarstellungen 3c erfolgen.

Meldungen mit normaler Priorität 2b sind solche, die dem Fahrer zur Information über Betriebszustände dienen, die von dem normalen Zustand abweichen und bei Bedarf eine Tätigkeit zur Behebung benötigen. Ein Beispiel ist die Meldung eines niedrigen Waschwasserstands. Solche Meldungen 2b bedürfen keiner sofortigen Handlung des Fahrers und werden somit zu seiner Information mitgeteilt, so dass er bei Bedarf tätig werden kann, um ihre Ursachen zu beheben. Somit können diese Meldungen 2b ohne Warn- oder Alarmsignal einfach durch geeignete Klartext- und/oder Bildanzeige 3d auf einer Multifunktionsanzeige erfolgen. Wahlweise kann vorgesehen sein, dass die Anzeige der Meldung 2b durch eine Interaktion, d. h. Bestätigung 5, durch den Fahrer beendet wird. Zusätzlich ist es möglich, nach Ablauf einer gewissen persönlich einstellbaren und/oder einer vordefinierten Zeit 6 automatisch die Anzeige der Meldung zu beenden, so dass der Fahrer nicht ständig irritiert und abgelenkt wird. Die Meldungen 2b mit normaler Priorität können bei ihrer Anzeige auch durch ein Warnsignal 4b unterstützt werden, das als Vorauswahl jedoch abgestellt ist.

Meldungen mit hoher Priorität 2c sind solche, die dem Fahrer zur Information über Fehlermeldungen dienen, die von dem normalen Zustand abweichen und eine Tätigkeit zur Behebung benötigen, jedoch nicht kritisch für den Betrieb des Fahrzeugs sind. Ein Beispiel ist die Meldung eines blockierten oder bedeckten (d. h. meist verschmutzter) Abstandssensors. Solche Meldungen bedürfen keiner sofortigen Handlung des Fahrers, sollten jedoch sobald wie möglich behoben werden. Somit werden diese Meldungen mit einem Warnsignal 4b und durch geeignete Klartext- und/oder Bildanzeigen 3d auf einer Multifunktionsanzeige und einer Hinweis- oder Warnlampe 3b erfolgen. Wahlweise kann vorgesehen sein, dass die Anzeige der Meldung 2c durch eine Interaktion, d. h. Bestätigung 5, durch den Fahrer beendet wird. Zusätzlich ist es möglich nach Ablauf einer gewissen persönlich einstellbaren und/oder einer vordefinierten Zeit 6 automatisch die Anzeige der Meldung zu beenden, so dass der Fahrer nicht ständig irritiert und abgelenkt wird. Die Meldungen mit hoher Priorität werden bei ihrer Anzeige auch durch ein Warnsignal 4b unterstützt, das aber je nach persönlicher Vorliebe einstellbar bzw. abstellbar ausgestaltet ist.

Meldungen mit höchster Priorität 2d sind solche, die dem Fahrer zur Information über Fehlermeldungen dienen, die von dem normalen Zustand abweichen und eine sofortige Tätigkeit zur Behebung benötigen, da sie kritisch für den Betrieb des Fahrzeugs sind. Ein Beispiel ist die Meldung über einen zu niedrigen Reifendruck. Solche Meldungen bedürfen einer sofortigen Handlung des Fahrers. Somit werden diese Meldungen mit einem Alarmsignal 4a und durch geeignete Klartext- und/oder Bildanzeigen 3d auf einer Multifunktionsanzeige und einer Alarmlampe 3a erfolgen. Wahlweise kann vorgesehen sein, dass die Anzeige der Meldung durch eine Interaktion, d. h. Bestätigung 5, durch den Fahrer beendet wird. Die Meldungen mit hoher Priorität 2d werden bei ihrer Anzeige auch durch das Alarmsignal 4a unterstützt, das nicht veränderbar oder ausstellbar ausgestaltet ist.

In allen obigen Fällen können bestätigte Meldungen wiederum über ein Logbuch erneut aufgerufen werden.

Zusätzlich wird dem Fahrer soweit notwendig und möglich ein Hinweis für die Tätigkeit zur Behebung der Ursache der Meldung angezeigt. So wird dem Fahrer im oben geschilderten Fall 2d zum sofortigen Anhalten geraten werden, um den Reifendruck zu kontrollieren.

In allen obigen Fällen wird der Fahrer über eine Klartext- und/oder Bildanzeige 3d so informiert, dass die jeweilige Meldung möglichst im verständlichen Klartext ohne unverständliche Abkürzungen und zudem mittels Piktogramm dem Fahrer mitgeteilt wird.

Somit ist es mit der Erfindung möglich, nicht nur möglichst viele Meldungen an den Fahrer in verständlicher Weise weiterzugeben, die er zur Sicherstellung der Betriebssicherheit und zur Vermeidung von Reparaturen oder größeren Schäden kennen muss, sondern der Fahrer wird angeleitet, was im jeweiligen Fall zu tun ist. Dabei wird er aber nicht durch unnötige akustische Signale ständig gestört und die Funktion der Beendigung der Mitteilung der jeweiligen Meldung durch Zeitablauf erlaubt einen einfachen Umgang mit unkritischen Meldungen.

Des Weiteren erlaubt die Interaktion durch Bestätigung 5 der Kenntnisnahme der Meldung durch den Fahrer, gewisse Meldungen gezielt abzustellen. So kann es gewünscht sein, absichtlich mit geöffneter Heckklappe zu fahren, z. B. zum Transport langer Gegenstände, wobei der Fahrer nicht dauerhaft durch einen Alarm gestört werden soll bzw. will.

Beispiele von Meldungen mit höchster Priorität 2d sind offene Türen, angezogene Handbremse, niedriger Reifendruck, Fehler im Scheinwerfersystem, Motorfehler oder leere Batterie.

Beispiele von Meldungen mit hoher Priorität 2c sind Ölniveau prüfen, Wasser im Kraftstoff, Abstandsensor blockiert, Wasser im Öl, Ölfüllhöhe zu hoch oder Getriebewartung notwendig.

Beispiele von Meldungen mit normaler Priorität 2b sind Ölservice fällig, Nebelleuchte ausgefallen, Waschwasserstand niedrig, Ölservice in X Tagen fällig, Bergassistent aus oder Sprachsteuerung - bitte wiederholen.

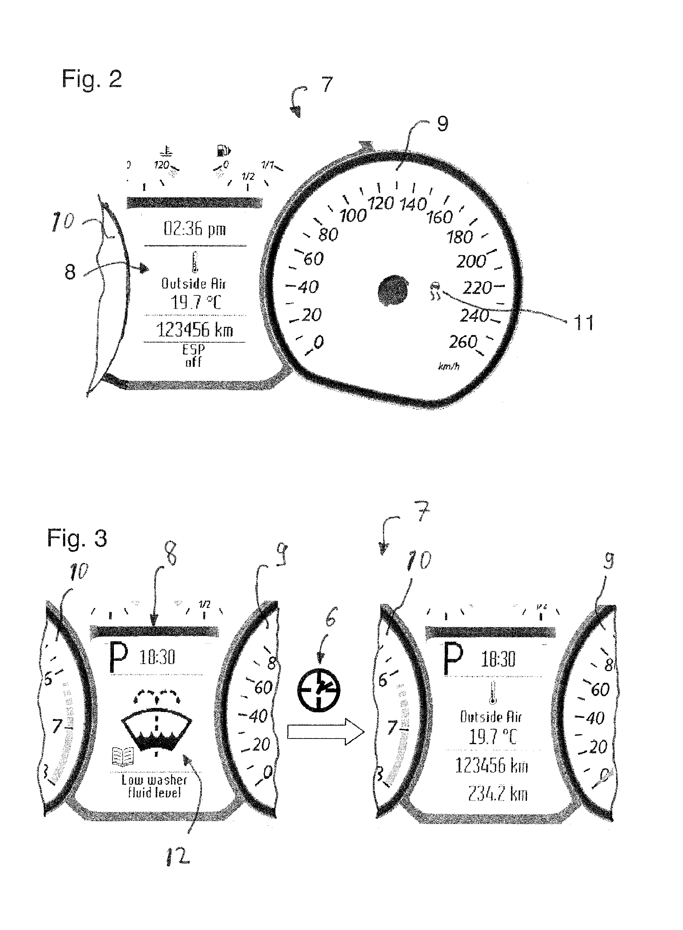

In den Figuren 2 bis 5 sind die oben angeführten Beispielmeldungen 2a - 2d nochmals anhand der Darstellung mit einem geeigneten System 7 dargestellt.

Das System 7 besteht aus einer Multifunktionsanzeige 8, die zwischen dem Tachometer 9 und dem Drehzahlmesser 10 angeordnet ist und zur Anzeige von Grafik und Klartext ansteuerbar ist. Das System 7 wird von dem Fahrzeugüberwachungssystem mit Meldungen 2 versorgt, die daraufhin in geeigneter Weise angezeigt werden.

Das System 7 umfasst daneben noch eine Reihe von Symbolleuchten 11, die kreisförmig um den Zeigermittelpunkt innerhalb der Skala des Tachometers 9 angeordnet sind und piktogrammartig zur Information des Fahrers über häufig wiederkehrende Meldungen dienen. Vorliegend sind die Symbole für das ABS, ESP, die Batterie, Ölstand, Handbremse, Kraftstoffreserve usw.

Im explizit dargestellten Beispiel einer Meldung mit niedriger Priorität 2a in Fig. 2, handelt es sich um die Information des Fahrers, dass das ESP Programm ausgeschaltet ist. Diese Information erfolgt vorliegend über eine Symbolleuchte 11 und die Klartextanzeige in der Multifunktionsanzeige 8 unten.

Im explizit dargestellten Beispiel einer Meldung mit normaler Priorität 2b in Fig. 3, handelt es sich um die Information des Fahrers, dass das Waschwasser bald verbraucht sein wird, also der Waschwasserstand niedrig ist. Diese Information erfolgt vorliegend über die Klartextanzeige in der Multifunktionsanzeige 8, wobei neben der Klartextanzeige auch ein verständliches Piktogramm verwendet wird. Daneben ist ein Hinweis-Piktogramm 12 sichtbar, das vorliegend dem Fahrer zu verstehen gibt, dass er im Handbuch des Fahrzeugs weitere Erläuterungen über das Auffüllen des Waschwassers findet.

Weitere Hinweis-Piktogramme könnten das Aufsuchen einer Werkstatt, eines Händlers usw. darstellen.

In Fig. 3 ist zusätzlich angedeutet, dass die Mitteilung über die Meldung 2b bezüglich des Waschwassers nach Ablauf einer vorgegebenen Zeit 6 beendet wird und die Multifunktionsanzeige 8 wieder in den Zustand vor der Meldung zurückkehrt (siehe rechte Hälfte der Figur 3).

Im explizit dargestellten Beispiel einer Meldung mit hoher Priorität 2c in Fig. 4, handelt es sich um die Information des Fahrers, dass der Abstandssensor blockiert ist. Diese Information erfolgt vorliegend über die Klartextanzeige in der Multifunktionsanzeige 8, wobei neben der Klartextanzeige auch ein verständliches Piktogramm verwendet wird. Daneben ist ein Hinweis-Piktogramm 12 sichtbar, das vorliegend dem Fahrer zu verstehen gibt, dass er im Handbuch des Fahrzeugs weitere Erläuterungen über das Beheben des Problems, üblicherweise Abwaschend der verdreckten Sensoren, erhält.

In Fig. 4 ist zusätzlich der Gebrauch einer Warnlampe 13 für den Warnhinweis 3b dargestellt, was die Aufmerksamkeit des Fahrers auf die Meldung erhöht. Die Warnlampe 13 ist oberhalb der Multifunktionsanzeige 8 im Bereich der Kraftstoffanzeige 14 angesiedelt. Bei Meldungen mit hoher Priorität 2c leuchtet sie bevorzugt gelb auf.

Zusätzlich zu der optischen Information des Fahrers wird dieser im Fall von Meldungen mit hoher Priorität 2c noch durch ein akustisches Warnsignal 4b, wie einem mehrfachen Gong, auf die Meldung aufmerksam gemacht.

Im explizit dargestellten Beispiel einer Meldung mit höchster Priorität 2d in Fig. 5, handelt es sich um die Information des Fahrers, dass Reifendruck vorne links zu niedrig ist. Diese Information erfolgt vorliegend über die Klartextanzeige in der Multifunktionsanzeige 8, wobei neben der Klartextanzeige auch ein verständliches Piktogramm verwendet wird. Daneben ist ein Hinweis-Piktogramm 12 sichtbar, das vorliegend dem Fahrer zu verstehen gibt, dass er sofort anhalten sollte, um den Reifen zu inspizieren.

In Fig. 5 ist zusätzlich der Gebrauch einer Alarmlampe 15 für den Alarmhinweis 3a dargestellt, was die Aufmerksamkeit des Fahrers auf die Meldung erhöht. Die Warnlampe 15 ist oberhalb der Multifunktionsanzeige 8 im Bereich der Motortemperaturanzeige 16 angesiedelt und leuchtet rot auf.

Zusätzlich zu der optischen Information des Fahrers wird dieser im Fall von Meldungen mit höchster Priorität 2d noch durch ein akustisches Alarmsignal 4a, wie einem mehrfachen Piepen, auf die Meldung aufmerksam gemacht.

In Fig. 5 ist zusätzlich angedeutet, dass die Mitteilung über die Meldung 2d bezüglich des Reifendrucks durch interaktive Bestätigung 5 durch den Fahrer beendet werden kann und die Multifunktionsanzeige 8 wieder in den Zustand vor der Meldung zurückkehrt (siehe rechte Hälfte der Figur 3).

### Bezugszeichenliste

- 1: Übersicht
- 2: Meldung
- 2a: Meldung mit niedriger Priorität
- 2b: Meldung mit normaler Priorität
- 2c: Meldung mit hoher Priorität
- 2d: Meldung mit höchster Priorität
- 3: Anzeigen
- 3a: Warnlampe
- 3b: Alarmlampe
- 3c: Symbollampe
- 3d: Klartext- und/oder Bildanzeige
- 4: Signale
- 4a: Warnsignal
- 4b: Alarmsignal
- 5: Bestätigung
- 6: Zeitablauf
- 7: System
- 8: Multifunktionsanzeige
- 9: Tachometer
- 10: Drehzahlmesser
- 11: Symbolleuchten
- 12: Hinweis-Piktogramm
- 13: Warnlampe
- 14: Kraftstoffanzeige
- 15: Alarmlampe
- 16: Motortemperaturanzeige

## Patentansprüche

**1.** Verfahren zur Information eines Fahrers eines Kraftfahrzeugs, insbesondere eines PKW, über auftretende Meldungen eines Fahrzeugüberwachungssystems, wobei eine Klassifizierung der Meldungen (2) nach der Wichtigkeit der Meldung der überwachten Fahrzeugfunktion vorgenommen wird und die Information des Fahrers über die zu meldende Information anhand der Klassifizierung der Meldung (2) vorgenommen wird.

**2.** Verfahren nach Anspruch 1, **dadurch gekennzeichnet, dass** die Information des Fahrers mittels einer optischen Anzeige (3) und/oder eines akustischen Signals (4) vorgenommen wird.

**3.** Verfahren nach Anspruch 3, **dadurch gekennzeichnet, dass** die optische Anzeige der zu meldenden Information über eine dedizierte (3c) und/oder generische Anzeige (3a,b) erfolgt.

**4.** Verfahren nach Anspruch 3, **dadurch gekennzeichnet, dass** die zu meldende Information dem Fahrer in Abhängigkeit von der Klassifizierung der Meldung in Form einer Lampe (3a,b) und/oder eines ggf. beleuchteten Symbols (3c) erfolgt.

**5.** Verfahren nach einem der Ansprüche 2 bis 4, **dadurch gekennzeichnet, dass** die optische Anzeige (3d) der zu meldenden Information über eine Multifunktionsanzeige (8) erfolgt.

**6.** Verfahren nach Anspruch 5, **dadurch gekennzeichnet, dass** die zu meldende Information dem Fahrer in Abhängigkeit von der Klassifizierung der Meldung im Klartext und/oder als Piktogramm (3d) angezeigt wird.

**7.** Verfahren nach einem der Ansprüche 2 bis 6, **dadurch gekennzeichnet, dass** der Fahrer in Abhängigkeit von der Klassifizierung der Meldung über ein akustisches Warnsignal (4b) auf die zu meldende Information aufmerksam gemacht wird.

**8.** Verfahren nach einem der Ansprüche 2 bis 7, **dadurch gekennzeichnet, dass** der Fahrer in Abhängigkeit von der Klassifizierung der Meldung über ein akustisches Alarmsignal (4a) auf die zu meldende Information aufmerksam gemacht wird.

**9.** Verfahren nach einem der Ansprüche 2 bis 8, **dadurch gekennzeichnet, dass** die Anzeige der zu meldenden Information nach einer vorgebbaren und/oder einer vor definierten Zeit (6) beendet wird.

**10.** Verfahren nach einem der Ansprüche 2 bis 9, **dadurch gekennzeichnet, dass** die Anzeige der zu meldenden Information nach einer Interaktion (5) des Fahrers beendet wird.

**12.** Verfahren nach einem der vorhergehenden Ansprüche, **dadurch gekennzeichnet, dass** die Information des Fahrer einen Hinweis (12) auf die Behebung der gemeldeten Funktion enthält.

**13.** Verfahren nach Anspruch 12, **dadurch gekennzeichnet, dass** der Hinweis (12) anhand der Klassifikation der zu meldenden Information ausgewählt wird.

**14.** Verfahren nach Anspruch 13, **dadurch gekennzeichnet, dass** der Hinweis ausgewählt wird aus der Gruppe bestehend aus: Sofort Anhalten, Werkstatt sofort aufsuchen, Werkstatt aufsuchen oder Handbuch konsultieren.

**15.** Verfahren nach einem der vorhergehenden Ansprüche, **dadurch gekennzeichnet, dass** die zu meldenden Informationen Fehlermeldungen (2b, 2c, 2d) des Fahrzeugüberwachungssystems sind.

**16.** Verfahren nach einem der vorhergehenden Ansprüche, **dadurch gekennzeichnet, dass** die zu meldenden Informationen nach der Wichtigkeit der Meldung der überwachten Fahrzeugfunktion in mindestens vier Klassen eingeteilt werden.

**17.** Verfahren nach Anspruch 16, **dadurch gekennzeichnet, dass** die Wichtigkeit ausgewählt wird aus der Gruppe bestehend aus: niedrig, normal, hoch oder äußerst wichtig.

**18.** System zur Information eines Fahrers eines Kraftfahrzeugs über auftretende Meldungen eines Fahrzeugüberwachungssystems, insbesondere zur Durchführung des Verfahrens nach einem der Ansprüche 1 bis 17, mit einer Einheit zur Klassifizierung der Meldungen (2) nach der Wichtigkeit der Meldung der überwachten Fahrzeugfunktion und mit einer Einheit für die Information des Fahrers über die Meldung anhand der Klassifizierung der Meldung.

**19.** System nach Anspruch 18, **dadurch gekennzeichnet, dass** die Einheit (7) für die Information des Fahrers mindestens eine optischen Anzeige (8, 13, 15), mindestens eine akustische Signalvorrichtung (4) und eine Interaktionseinheit (5) für den Fahrer umfasst, wobei die Interaktionseinheit für den Fahrer derart verschaltet ist, dass ihre Betätigung die Information des Fahrers beendet.

**20.** System nach Anspruch 18 oder 19, **dadurch gekennzeichnet, dass** die optische Anzeige mindestens eine dedizierte Lampe und/oder mindestens eine generische Lampe (3a,b) und/oder mindestens ein beleuchtetes Symbol (3c, 11) und/oder mindestens eine Multifunktionsanzeige (3d, 8) umfasst.

**21.** System nach Anspruch 20, **dadurch gekennzeichnet, dass** die Multifunktionsanzeige (8) im zentralen Sichtfeld des Fahrers angeordnet ist, insbesondere in einem Headup-Display, in einem Kombi-Instrument, insbesondere zwischen Tachometer und Drehzahlmesser, in einer zentralen Anzeige oberhalb der Mittelkonsole und/oder an einer anderen geeigneten Stelle im Armaturenbrett.

**22.** System nach einem der Ansprüche 19 bis 21, **dadurch gekennzeichnet, dass** die dedizierte Lampe und/oder die generische Lampe und/oder das beleuchtete Symbol (11) konzentrisch innerhalb des Tachometer (9) und/oder des Drehzahlmessers (10) angeordnet sind.

**23.** System nach einem der Ansprüche 19 bis 22, **dadurch gekennzeichnet, dass** die akustische Signalvorrichtung (4) ausgestaltet ist, um mindestens ein Warn- und ein Alarmsignal in Abhängigkeit der Klassifikation der Meldung auszugeben.

**24.** System nach einem der Ansprüche 18 bis 23, **dadurch gekennzeichnet, dass** die Einheit für die Information des Fahrers eine Zeiteinheit umfasst, die die Information des Fahrers in Abhängigkeit der Klassifikation nach einer vorgebbaren Zeitdauer (6) beendet.

**25.** Durchführung des Verfahrens nach einem der Ansprüche 1 bis 17 mit einem System nach einem der Ansprüche 18 bis 24, wobei je nach Klassifikation der Meldung die Information des Fahrers über die generische Lampe, die dedizierte Lampe, die generische Lampe, das beleuchtete Symbol, die Multifunktionsanzeige oder der akustischen Signalvorrichtung oder Kombinationen der zuvor genannten erfolgt.
